Europäisches Patentamt

European Patent Office

Office européen des brevets

(19)

(11) Numéro de publication: **0 042 311**
**A1**

# (12) DEMANDE DE BREVET EUROPEEN

(21) Numéro de dépôt: **81400034.5**

(22) Date de dépôt: **12.01.81**

(51) Int. Cl.³: **B 23 K 9/12**

(30) Priorité: **12.06.80 FR 8013102**

(43) Date de publication de la demande: **23.12.81**
**Bulletin 81/51**

(84) Etats contractants désignés: **AT BE CH DE GB IT LI LU
NL SE**

(71) Demandeur: **Prunier, Robert, Route de Semur, Crepand
F-21500 Montbard (FR)**

(72) Inventeur: **Prunier, Robert, Route de Semur, Crepand
F-21500 Montbard (FR)**

(74) Mandataire: **Netter, André, Cabinet NETTER 40, rue
Vignon, F-75009 Paris (FR)**

(54) **Tube contact pour le soudage à l'arc.**

(57) L'invention concerne le soudage à l'arc. Elle a notamment pour objet un tube de contact (142) destiné à guider vers un ouvrage à souder un fil de métal d'apport (140, 141) en le maintenant en contact électrique a l'intérieur d'un canal longitudinal (144) pratiqué dans ce tube.

Afin d'améliorer la qualité et la régularité de la soudure, des moyens de rattrapage de jeu (158, 163, 164) sont prévus, tendant à appliquer en permanence le fil contre la paroi interne du canal (144) dans le tube tout en lui permettant de coulisser longitudinalement à frottement doux dans ce canal.

Application aux machines automatiques de soudage.

## "TUBE CONTACT POUR LE SOUDAGE A L'ARC"

L'invention a pour objet un perfectionnement aux machines de soudage à l'arc.

Dans les procédés de soudage à l'arc, un arc électrique est entretenu entre un fil ou une baguette de métal d'apport et les pièces à souder pour déposer un cordon de métal d'apport en fusion le long de leurs bords chauffés par l'arc.

Certaines machines automatiques de soudage à l'arc comportent des moyens d'avance en continu du fil enroulé sur une bobine dont le brin libre est entraîné régulièrement en direction de l'ouvrage, par exemple par un jeu de galets moteurs.

Afin de guider ce fil de métal d'apport et de l'alimenter en énergie électrique convenable pour l'entretien de l'arc, on le fait passer à frottement doux dans le canal que ménage un tube de contact en métal conducteur, par exemple en cuivre, le courant électrique étant transmis au fil par contact avec la paroi interne du canal.

En raison des valeurs très élevées du courant à transmettre, une bonne qualité de contact est nécessaire.

Les tubes de contact disponibles actuellement présentent l'inconvénient de s'user rapidement. Après quelques heures d'utilisation, le fil de métal d'apport tend à se bloquer par intermittence dans le tube et à avancer par saccades, l'intensité du courant varie et le cordon de soudure devient irrégulier. Il est alors nécessaire de changer le tube.

La présente invention a pour objet un tube de contact pour soudage qui remédie à ces inconvénients. Ce tube comprend un corps conducteur percé d'un canal longitudinal propre à recevoir un fil de métal d'apport de dimension correspondante animé d'un pouvement d'avance longitudinale vers l'ouvrage en le maintenant en contact électrique avec la paroi interne de ce canal et il est caractérisé en ce qu'il comporte en outre des moyens de rattrapage de jeu propres à appliquer le fil en permanence contre la paroi du canal.

On a constaté qu'un rattrapage de jeu propre à améliorer la qualité du contact transversal entre le fil de métal d'apport et la paroi interne du tube permettait de prolonger très sensiblement la durée de vie utile d'un tel tube, c'est-à-dire le temps pendant lequel il permet de réaliser des cordons de soudure très réguliers. Cette amélioration des performances des tubes de contact permet notamment d'étendre l'application des machines qui les mettent en oeuvre à des soudures de précision pour des pièces de haute performance dans des conditions
économiquement favorables.

Suivant un mode de réalisation, les moyens de rattrapage de jeu comprennent une première et une deuxième pièces
dans le corps constitutif du tube dont les faces en regard
ménagent chacune une portion de la paroi interne du canal sur
une partie au moins de la longueur de celui-ci ; ces faces
sont dimensionnées pour enserrer le fil lorsqu'on les rapproche l'un de l'autre tout en laissant subsister un jeu entre
elles ; des moyens de serrage sollicitent lesdites pièces
l'une vers l'autre dans une direction transversale pour exercer en permanence une légère pression sur le fil tendant à
l'appliquer contre les portions de parois internes dudit canal
ménagées sur lesdites faces en regard.

Conformément à un autre mode de réalisation, le corps
du tube présente un perçage transversal rencontrant ledit
canal de guidage longitudinal et les moyens de rattrapage de
jeu comprennent une cheville mobile selon la direction de ce
perçage et présentant un passage propre à être aligné avec le
canal longitudinal pour permettre au fil de métal d'apport
engagé dans le canal longitudinal de traverser la cheville.
Les moyens de rattrapage de jeu comprennent également des
moyens élastiques propres à solliciter la cheville dans la
direction du perçage pour maintenir une face interne dudit passage en contact avec le fil de façon à appliquer ce dernier
contre la paroi interne du canal.

Dans la description qui suit, on se réfère aux dessins
annexés dans lesquels :

la figure 1 est une vue très schématique d'une installation de soudage équipée d'un tube de contact conventionnel;

la figure 2 est une vue en élévation d'un mode de réalisation de l'invention ;

la figure 3 est une vue éclatée du mode de réalisation
de la figure 2 ;

la figure 4 est une vue en bout de ce mode de réalisation ;

la figure 5 est une vue éclatée d'un autre mode de réalisation de l'invention ;

la figure 6 est une vue en coupe longitudinale d'une autre variante de réalisation.

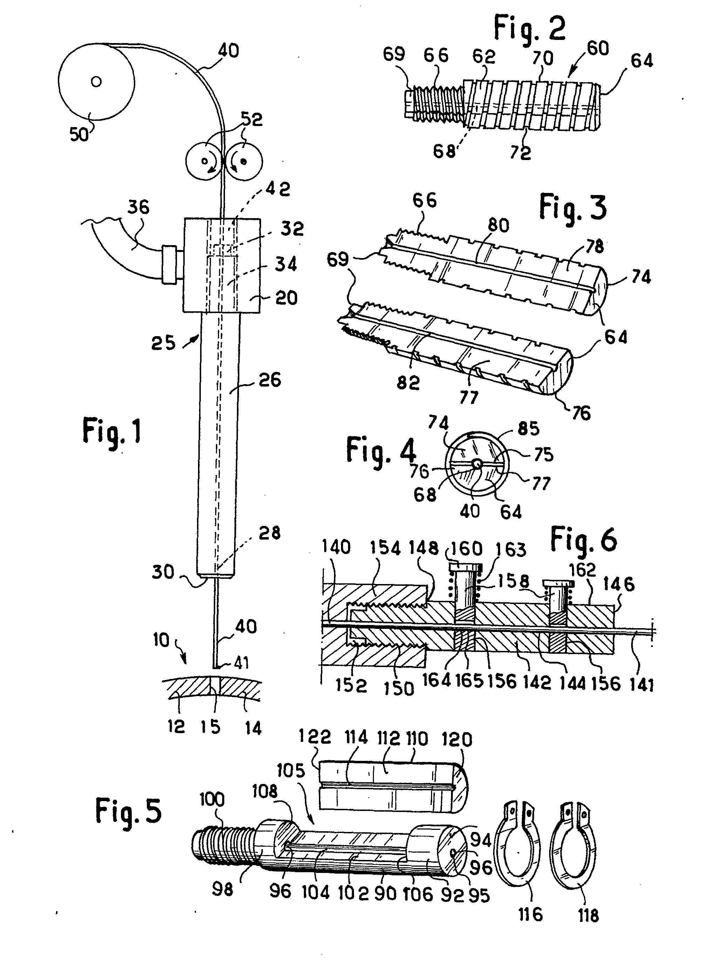

Au-dessus d'un ouvrage 10 comportant deux pièces 12 et 14 à réunir (fig. 1) est montée une installation de soudage automatique propre à réaliser un cordon de soudure entre les bords 15 de ces deux pièces 12 et 14 mises à la masse de l'installation. L'installation comporte de façon très schématique une tête d'électrode 20 en un métal conducteur entouré d'une garniture isolante, dans laquelle est monté un tube de contact vertical 25 en cuivre qui comporte un corps cylindrique 26 percé d'un trou ou canal longitudinal 28 débouchant, d'une part, dans la face d'extrémité frontale 30 du tube 25 en regard de l'ouvrage 10 et, d'autre part, dans la face d'extrémité postérieure 32 de ce tube, à l'intérieur de la tête 20. La partie postérieure 34 du corps de tube 26 est filetée et vissée dans la tête d'électrode 20. La tête d'électrode 20 est raccordée à une source d'énergie électrique par l'intermédiaire d'un câble 36. Le trou 28 est calibré au diamètre d'un fil de métal d'apport 40 qui traverse l'assemblage de haut en bas, le fil 40 pénètre par une cavité 42 en haut de la tête 20 dans le prolongement du corps 26, passe à travers le trou 28 pour ressortir sur la face frontale 30 du corps 26, son brin libre 41 se terminant à faible distance au-dessus des bords 15 de l'ouvrage 10, déterminée par les conditions d'amorçage ou d'entretien de l'arc électrique. Le fil 40 est alimenté à partir d'une bobine 50 sur laquelle il est enroulé. Il passe entre deux galets moteurs 52 tournant en sens inverse qui exercent sur lui un effort de traction en dévidant la bobine 50 pour le forcer à l'intérieur du trou 30 à une vitesse qui est réglée en fonction de la consommation de ce métal pour la formation du cordon de soudure réunissant les pièces 12 et 14. Le diamètre interne du trou 28 est déterminé pour que le fil 28 coulisse à l'intérieur de ce tube à frottement doux de façon à assurer à la fois un guidage précis de l'extrémité 41 de ce fil au sortir de la face frontale 30 et une bonne transmission électrique du courant alimentant l'arc.

On a constaté que la brièveté de la vie utile des tubes de contact tels que le tube 25 était due à une usure de la paroi interne du trou 28 à l'intérieur du corps 26, dont la section tend à s'ovaliser par le frottement du fil 40 d'autant plus rapidement que la dureté du métal d'apport est grande

4

par rapport à celle du métal constitutif du tube. Ce dernier est en général en cuivre, bon conducteur de l'électricité mais relativement mou, tandis que certains métaux d'apport en aciers spéciaux peuvent être très durs.

L'agrandissement du diamètre interne du trou 28 guidant le fil 40 de métal d'apport facilite l'encrassage de ce trou et favorise l'amorçage d'arcs entre le fil et sa paroi interne. Ces arcs tendent à perturber le défilement régulier du fil dans le trou qui procède alors par mouvements heurtés. En outre, la résistance de contact entre le fil 41 et la paroi du trou 28 augmente lorsque la qualité du contact diminue et est sujette à variations brusques au cours du déplacement du fil, avec variations corrélatives d'intensité du courant d'alimentation de l'arc. Celles-ci sont cause d'une fusion irrégulière du métal d'apport qui suit à l'uniformité du cordon de soudure entre les plaques 12 et 14.

Afin de rétablir une bonne qualité de contact entre un fil de métal d'apport et la paroi intérieure d'un tube de contact, on prévoit de remplacer le tube 25 par un tube équipé d'un dispositif de rattrapage de jeu.

Un tube de contact 60 (figure 2) avec dispositif de rattrapage de jeu comporte un corps 62 de forme générale cylindrique allongée, terminé à sa partie antérieure par une face frontale 64, et dont la partie postérieure 66 forme un embout fileté propre à être vissé dans une tête d'électrode telle que 20 (figure 1). Le corps 62 est traversé longitudinalement par un trou ou canal de guidage 68 qui relie sa face d'extrémité postérieure 69 à la face antérieure 64. La face externe 70 du corps 62 est entaillée par une rainure hélicoïdale 72, centrée sur l'axe du trou 68.

Le corps 62 est scindé en deux moitiés 74 et 76 (figures 3 et 4) selon un plan diamétral longitudinal. Les moitiés 74 et 76 possèdent des faces en regard respectives 75 et 77, parallèles à ce plan de section longitudinale. Dans chacune de ces faces 75 et 77 est ménagé un sillon axial 80 respectivement 82 formant une partie longitudinale de la paroi interne du trou 68. Dans un plan de section transversale, la dimension de ces sillons 80 et 82 est telle que, lorsque les deux moitiés 74 et 76 sont réunies autour du fil 40 logé dans ces sillons (fig. 4), les faces 75 et 77 ne soient pas parfaitement jointives mais ménagent un léger jeu entre elles.

Un ressort hélicoïdal 85 de pas sensiblement égal à celui de la rainure hélicoïdale 72, mais de diamètre interne légèrement plus petit que celui de cette rainure est enfilé autour du corps 62 avec ses spires logées dans cette rainure afin d'exercer une pression sur les pièces 74 et 76 tendant à les rapprocher, avec effet d'enserrer le fil 40 en lui appliquant une pression constante. En même temps, l'engagement des spires du ressort 85 dans la rainure 72 empêche tout déplacement relatif des pièces 74, 76 et du ressort 85 dans la direction longitudinale.

Le jeu entre les faces 75 et 77 peut être obtenu et ajusté en enlevant une légère quantité de matière sur l'une de ces faces ou les deux. Au fur et à mesure de l'usure des parois internes des sillons 80 et 82 par le fil 40, les deux pièces 74 et 76 tendent à se rapprocher en maintenant ainsi un contact à frottement doux avec le fil 40, jusqu'à ce que le degré d'usure soit tel que le jeu existant entre les faces 75 et 77 soit entièrement comblé.

Selon un autre mode de réalisation, un corps de tube de contact 90 (figure 5) présente un embout cylindrique 92 à l'extrémité duquel est ménagée une face frontale 94 dans laquelle débouche par un orifice 95 un trou ou canal longitudinal interne de guidage 96 du fil 40. A son autre extrémité, le corps 90 présente une portion cylindrique 98 à laquelle est raccordé un embout fileté 100 pour le montage du tube de contact dans une tête d'électrode. Dans sa partie médiane, le corps 90 est découpé par une échancrure 105 délimitée, d'une part par un plan de section diamétrale longitudinale ménageant une face plane 102 dans le corps 90 dans laquelle apparaît un sillon 104 définissant une portion de la paroi longitudinale du trou 96, et d'autre part deux plans de section perpendiculaires à l'axe du trou 96, définissant deux faces 106 et 108 en regard, au voisinage des embouts cylindriques 92 et 98 respectivement.

Une pièce 110 complémentaire de la forme du corps 90 et possédant une face 112 dans laquelle est formé un sillon longitudinal 114, définissant une portion complémentaire de la paroi longitudinale du trou 96, est propre à venir s'engager dans l'échancrure 105 pour venir enserrer le fil 40 traversant le trou 96. La dimension en section droite des sillons 104 et 114 est déterminée pour que, dans cette position, les faces en regard 102 et 112 soient séparées par un jeu.

Deux clips annulaires en acier à ressort 116 et 118 sont destinés à être enfilés axialement autour du corps 90 pour solliciter les pièces 110 et 90 l'une vers l'autre en enserrant entre elles le fil 40. Grâce au jeu entre les faces 102 et 112 cette pression continuera de s'exercer tant que l'usure des sillons 104 et 114 ne l'aura pas comblé. La pièce 110 présente des faces d'extrémité semi-circulaires 120 et 122 dans un plan de section transversale en regard des faces 106 et 108 bordant l'échancrure 105 du corps 90 lesquelles empêchent tout déplacement longitudinal de la pièce 110 par rapport au corps 90.

Une variante de réalisation (figure 6) comporte un corps de tube 142 de forme générale cylindrique, traversé par un trou ou canal longitudinal 144 et possédant une face d'extrémité antérieure 146 dans laquelle débouche le trou 144 et une face d'extrémité postérieure 148 prolongée par un embout fileté 150 qui, dans la position représentée, est vissé dans un taraudage pratiqué à l'intérieur d'une cavité 152 d'une tête d'électrode 154, la face 148 venant en butée contre cette tête. Le fil 140 pénètre à la partie postérieure de la tête de l'électrode 154 dans le trou 144 et son extrémité 141 émerge à la sortie du trou 144 dans la face 146.

Le corps 142 comporte deux perçages transversaux 156 espacés longitudinalement l'un de l'autre. Dans chacun des perçages 156 est monté à coulissement un plot respectif ou cheville 158 terminé d'un côté par une tête élargie 160. Un ressort de compression 163 est monté autour de chaque plot 158 entre la partie inférieure de la tête 160 et la surface externe cylindrique 162 du corps 142. Chaque plot présente une ouverture 164 qui peut être alignée avec le trou 144 lorsque le plot 158 est enfoncé à l'encontre du ressort 163 dans le perçage 156 à une distance convenable afin de laisser passer le fil de métal d'apport 140 qui traverse dans le trou 144. L'ouverture 164 possède une paroi latérale interne 165, à l'opposé du ressort 163 par rapport au fil 140, qui est sollicitée par ce ressort pour venir s'appuyer transversalement contre ce fil en l'appliquant ainsi avec une légère pression constante contre la paroi interne du trou 144 de part et d'autre du
perçage 156. Par réaction de la paroi interne du trou 144
le fil empêche le plot 158 de sortir du perçage 156. Les deux
plots 158 ont une action analogue sur le fil 140 qu'ils maintiennent en contact avec la paroi interne du trou 144 sur
une fraction substantielle de sa longueur. Bien entendu le
nombre de perçages transversaux 156 n'est pas limité et peut
être inférieur ou supérieur à deux en fonction de la longueur
du tube contact.

Ainsi, en dépit de l'usure de la paroi de son canal
de guidage, le fil de métal d'apport est maintenu, conformément à l'invention, en contact constant avec au moins un côté
de cette paroi. Au fur et à mesure que l'usure agrandit ce
canal, le dispositif de rattrapage de jeu maintient un bon
contact conducteur de courant entre les deux pièces. On a
constaté que, par ce moyen, on pouvait conserver une progression régulière du fil 140 pendant une période très supérieure
à la vie utile d'un tube de contact conventionnel tel que
celui représenté à la figure 1 et corrélativement une grande
régularité de la soudure obtenue, qui permet d'effectuer des
travaux requérant une grande précision. Outre cette augmentation de la durée de vie utile des tubes, on a constaté que le
travail pouvait s'effectuer plus rapidement, en raison du
meilleur contrôle des conditions optimales de dépose du cordon de soudure qu'autorise une meilleure régularité du fonctionnement, conséquence de la mise en oeuvre de l'invention.

REVENDICATIONS

1. Tube de contact pour machine de soudage à l'arc comportant un corps conducteur percé d'un canal longitudinal propre à recevoir un fil de métal d'apport (140) de dimension correspondante animé d'un mouvement d'avance longitudinale vers l'ouvrage, en le maintenant en contact électrique avec la paroi de ce canal, caractérisé en ce qu'il comprend des moyens de rattrapage de jeu (156, 158, 163, 164) propres à appliquer ce fil contre la paroi de ce canal.

2. Tube de contact selon la revendication 1, caractérisé en ce que les moyens de rattrapage de jeu comprennent une première et une deuxième pièces (74 et 76) dudit corps ayant des faces (75, 77) respectives en regard qui ménagent chacune une portion longitudinale (80, 82) de la paroi interne du canal sur une partie au moins de sa longueur, lesdites faces étant dimensionnées pour enserrer le fil (40) en laissant subsister entre elles un jeu quand elles sont rapprochées l'une de l'autre, et des moyens de serrage (85) pour solliciter ces pièces l'une vers l'autre dans une direction transversale.

3. Tube selon la revendication 2, caractérisé en ce que lesdits moyens de serrage comprennent un ressort hélicoïdal (85) propre à être monté audit dudit corps pour enserrer lesdites pièces (74 et 76).

4. Tube selon la revendication 3, caractérisé en ce que la surface externe (70) desdites pièces est pourvue de rainures hélicoïdales (72) propres à recevoir les spires du ressort (85) pour caler lesdites pièces l'une par rapport à l'autre dans la direction longitudinale.

5. Tube selon l'une des revendications 2 à 4, caractérisé en ce que la première et la deuxième pièces sont deux moitiés du corps de tube scindé selon un plan diamétral longitudinal.

6. Tube selon la revendication 2, caractérisé en ce que la première et la deuxième pièces sont deux portions complémentaires (90 et 110) séparées par un plan de coupe diamétrale longitudinale de ce corps de tube sur une partie de sa longueur.

7. Tube selon la revendication 5, caractérisé en ce que ladite coupe longitudinale ne s'étend pas aux extrémités (92,98) dudit corps et les moyens de serrage comprennent au moins un clip (116) de serrage desdites portions complémentaires l'une vers l'autre.

8. Tube selon la revendication 1, caractérisé en ce que le corps du tube comporte une échancrure (105) qui intercepte la paroi du canal sur une partie de sa longueur et les moyens de rattrapage de jeu comprennent une pièce d'appui (110) propre à être engagée dans ladite échancrure pour venir en contact avec le fil au fond de cette échancrure, et des moyens de serrage (116, 118) pour solliciter la pièce d'appui (110) transversalement vers le fond de ladite échancrure (105).

9. Tube selon la revendication 1, caractérisé en ce que le corps de tube est traversé par un perçage (156) transversal rencontrant ledit canal longitudinal et que les moyens de rattrapage de jeu comprennent une cheville (158) mobile dans la direction de ce perçage et comportant un passage (164) propre à être aligné avec ledit canal longitudinal pour permettre au fil dans le canal de traverser cette cheville, et des moyens élastiques propres à solliciter cette cheville dans la direction du perçage pour maintenir la paroi interne (165) dudit passage contre le fil en appliquant ce dernier par réaction contre la paroi interne du canal (144).

10. Tube selon la revendication 8, caractérisé en ce que lesdits moyens de rattrapage de jeu comportent une deuxième cheville (158) montée coulissante dans un deuxième perçage (156) agencés de façon analogue et espacés longitudinalement par rapport à la cheville et au perçage de la revendication 9.

0042311

1/1

Fig. 1
Fig. 2
Fig. 3
Fig. 4
Fig. 5
Fig. 6

## DOCUMENTS CONSIDERES COMME PERTINENTS

| Catégorie | Citation du document avec indication, en cas de besoin, des parties pertinentes | Revendication concernée |
|---|---|---|
| X | GB - A - 423 021 (THOMSON-HOUSTON)<br>* Page 2, lignes 64-117 *<br>& DE - C - 657 128<br><br>-- | 1,7-9 |
| X | FR - A - 1 308 846 (PULLMAX)<br>* Page 3, résumé *<br>& GB - A - 931 500<br>& DE - B - 1 177 266<br>& CH - A - 397 905<br>& NL - A - 272 352<br><br>-- | 1,2,5 |
| X | GB - A - 583 671 (LINDE AIR)<br>* Page 4, lignes 6-24 *<br><br>-- | 1,2,5,<br>6,8 |
| X | US - A - 3 290 480 (THIOKOL)<br>* Colonnes 5 et 6 *<br><br>-- | 1,2,5,<br>6 |
| X | US - A - 3 142 746 (A.O. SMITH)<br>* Colonne 4 *<br><br>-- | 1,7,8 |
| X | US - A - 2 981 825 (GEN. ELECTRIC)<br>* Colonne 6, lignes 28-48 *<br><br>-- | 1,2,5-<br>8 |
| X | GB - A - 549 221 (G.D. PETERS)<br>* Page 6, lignes 36-124 *<br><br>-- | 1,2 |

./.

**CLASSEMENT DE LA DEMANDE** (Int. Cl.³)

B 23 K 9/12

**DOMAINES TECHNIQUES RECHERCHES** (Int. Cl.³)

B 23 K 9/12

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-08-1981 | HOORNAERT |

OEB Form 1503.1  06.78

## DOCUMENTS CONSIDERES COMME PERTINENTS

| Catégorie | Citation du document avec indication, en cas de besoin, des parties pertinentes | Revendication concernée |
|---|---|---|
| X | <u>DE - B - 1 008 839</u> (VEB BERGMANN) <br> * En entier * <br><br> ---- | 1,2 |

**CLASSEMENT DE LA DEMANDE (Int. Cl. 3)**

**DOMAINES TECHNIQUES RECHERCHES (Int. Cl. 3)**